(19) Europäisches Patentamt
European Patent Office
Office européen des brevets

(11) **EP 4 552 936 A1**

(12) **EUROPÄISCHE PATENTANMELDUNG**

(43) Veröffentlichungstag:
**14.05.2025 Patentblatt 2025/20**

(21) Anmeldenummer: **23208391.5**

(22) Anmeldetag: **07.11.2023**

(51) Internationale Patentklassifikation (IPC):
***B60T 17/00*** *(2006.01)* ***F15B 21/048*** *(2019.01)*

(52) Gemeinsame Patentklassifikation (CPC):
**B60T 17/004; F15B 21/005; F15B 21/041;
F15B 21/048; F15B 21/082;** F15B 2211/625;
F15B 2211/6303; F15B 2211/6309

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **ZF CV Systems Global GmbH
3006 Bern (CH)**

(72) Erfinder:
• **BAASKE, Leon
30419 Hannover (DE)**

• **CHAMOT, Marcin
54-611 Wroclaw (PL)**
• **KHAN, Ahmadulla
30419 Hannover (DE)**
• **PENDZICH, Kevin
30161 Hannover (DE)**
• **DÜCKMANN, Rudolf
30916 Isernhagen (DE)**

(74) Vertreter: **Copi, Joachim
ZF CV Systems Hannover GmbH
Am Lindener Hafen 21
30453 Hannover (DE)**

(54) **VERFAHREN ZUR STEUERUNG EINER DRUCKLUFT-VERSORGUNGSEINRICHTUNG UND DRUCKLUFT-VERSORGUNGSEINRICHTUNG FÜR EIN DRUCKLUFTSYSTEM EINES NUTZFAHRZEUGS**

(57) Die Erfindung betrifft ein Verfahren zur Steuerung einer Druckluft-Versorgungseinrichtung eines Druckluftsystems eines Nutzfahrzeugs und ein derartiges Druckluftsystem. wobei die Druckluft- Versorgungseinrichtung einen Kompressor, eine Lufttrocknereinheit und eine Regenerations-Ventileinrichtung aufweist und in einem Betriebsmodus mit Förderphasen und Regenerationsphasen betrieben wird. Hierbei ist vorgesehen, dass in dem Druckluftsystem eine aktuelle Feuchtigkeit, z.B. eine relative oder absolute Feuchtigkeit, ermittelt wird,
aus der ermittelten Feuchtigkeit eine aktuelle Taupunktabsenkung (c-DPD) ermittelt wird,
eine Soll-Taupunktabsenkung (t-DPD) ermittelt wird aus aktuellen und/oder projizierten Umgebungs-Temperaturdaten (TO, T(t)) und/oder aus aktuellen und/oder zu projizierten Fahrzeug-Betriebsdaten, und
nachfolgend aus aktuellen und/oder projizierten Umgebungs-Temperaturdaten (T0, T(t)) eine Soll-Taupunktabsenkung (t-DPD) ermittelt und mit der aktuellen Taupunktabsenkung (c-DPD) verglichen wird. Nachfolgend werden der Betriebsmodus und/oder die Regenerationsphasen in Abhängigkeit des Vergleichs eingestellt und/oder geändert.

**Fig. 2**

EP 4 552 936 A1

**Beschreibung**

Die Erfindung betrifft ein Verfahren zur Steuerung einer Druckluft- Versorgungseinrichtung sowie eine derartige Druckluft-Versorgungseinrichtung für ein Druckluftsystem eines Nutzfahrzeugs.

Eine Druckluft-Versorgungseinrichtung in einem Nutzfahrzeug weist im Allgemeinen einen Kompressor auf, der Luft aufnimmt und verdichtet, sowie eine nachfolgende Lufttrocknereinheit, die die zugeführte Druckluft reinigt und trocknet, so dass die getrocknete Druckluft zu einem Ausgangsbereich der Lufttrocknereinheit geführt wird.

An den Ausgangsbereich schließen sich im Allgemeinen über eine Mehrkreisschutzventil-Einrichtung eine Verbraucherstufe mit Verbraucherkreisen an, in denen die geförderte Druckluft in Druckluftspeichern gespeichert wird. In Förderphasen gelangt somit Druckluft durch die Trocknereinheit in den Ausgangsbereich; in Regenerationsphasen wird die Druckluft aus dem Ausgangsbereich über eine Regenerations-Ventileinrichtung zurückgeführt, teilweise entspannt und rückwärts durch die Lufttrocknereinheit geführt, um ihr Feuchtigkeit zu entziehen. Durch Einstellung der Regenerationsphasen, d. h. die Länge der Regenerationsphasen und ihre Anzahl, kann somit der Trocknungsgrad der Druckluft eingestellt werden.

Der Taupunkt, d. h. die Taupunkt-Temperatur, gibt die Temperatur an, bei der in einem Luft-Dampf-Gemisch Feuchtigkeit ausfällt. Somit ist der Taupunkt ein Maß für die absolute Feuchte in dem Luftvolumen. Die Taupunktabsenkung (dew point depression, DPD) gibt die Absenkung des Taupunktes wieder, die insbesondere durch Reduzierung der Feuchte erreicht wird und relativ zu der Umgebungstemperatur definiert wird. Die Taupunktabsenkung ist somit ein Performance-Indikator bzw. Leistungs-Indikator für eine Lufttrocknereinheit und die Druckluft- Versorgungseinrichtung. Durch eine hinreichend hohe Taupunktabsenkung kann verhindert werden, dass in der nachfolgend gespeicherten Druckluft Feuchtigkeit kondensiert. Daher werden insbesondere die Regenerationsphasen derartig eingestellt, dass eine hohe Taupunktabsenkung auftritt und somit die Gefahr eines Niederschlags von Wasser verringert werden kann.

Die Regenerationsphasen führen jedoch jeweils zu einem Energieverlust, da zuvor geförderte Druckluft wiederum aus dem System abgelassen wird. Somit wird in der Steuerung der Regenerationsphasen im Allgemeinen eine hohe Trockner-Leistung eingestellt, d. h. mit langen Regenerationsphasen, um die erforderliche Sicherheit zu gewährleisten, im Allgemeinen jedoch mit relativ hohem Energieverbrauch.

Die DE 10 2010 018 949 A1 beschreibt eine Druckluft-Aufbereitungseinrichtung und ein Druckluft-Versorgungssystem sowie ein Verfahren zum Betrieb hierzu, wobei zwischen einem Drucklufteingang der Druckluft-Aufbereitungseinrichtung, an den der Kompressor anschließbar ist, und einer Trocknungseinrichtung eine Entlüftungsleitung mit einem pneumatisch betätigbaren Entlüftungsventil angeordnet ist, das einen Regenerationspfad schaltet. Hierbei ist vorgesehen, dass eine Ermittlung bzw. Abschätzung einer in die Trocknungseinrichtung eingebrachten Feuchtigkeitsmenge durch einen Feuchtigkeitssensor oder durch Abschätzung der in Förderrichtung durchgeströmten Luftmenge erfolgt.

Die CA 2073439 C beschreibt die Anbringung eines Feuchtigkeitssensors in einem nachgeschalteten Druckluftspeicher.

Die DE 10 2010 025 890 A1 beschreibt eine Steuereinrichtung für eine Luftaufbereitungsanlage eines Fahrzeugs, zur Einleitung verschiedener Betriebsphasen der Luftaufbereitungsanlage, wobei die Steuereinrichtung externe Messsignale mit Angaben über einen Zustand einer Umgebungsluft, insbesondere der Temperatur und der relativen Feuchtigkeit und/oder absoluten Feuchtigkeit der Umgebungsluft aufnimmt, wobei die externen Messsignale auf Grundlage von Messsignalen eines Sensors des Verbrennungsmotors gebildet sind, der insbesondere ein Feuchtigkeitssensor sein kann. Aus dem externen Messsignal kann durch zeitliche Integration eine absolute Wassermenge der von der Luftaufbereitungsanlage aufgenommenen Umgebungsluft ermittelt und mit der Aufnahmekapazität eines Lufttrockners verglichen werden, um in Abhängigkeit des Vergleichs Regenerationsphasen einzustellen.

Die DE 3 727 603 A1 beschreibt eine Druckluft-Aufbereitungseinrichtung für Druckluftsysteme, insbesondere für Druckluft-Bremsanlagen, bei der ein Lufttrockner aus einer Betriebsstellung in einen Regenerationsbetrieb zum Entfeuchten eines Trocknungsmittels umsteuerbar ist, indem der Lufttrockner an einen Regerations- Luftspeicher angeschlossen ist. Es erfolgt eine mehrfache Regeneration des Trocknungsmittels, um eine größere Taupunktabsenkung zu erreichen, wobei für eine zuverlässige Umschaltung des Lufttrockners das Schaltventil an dem Auslass des Lufttrockners angeschlossen ist und bei Erreichen eines oberen und unteren Druckgrenzwertes im Regenerationsluftspeicher umgeschaltet wird. Der Umschaltzyklus des Lufttrockners von seiner Regenerationsphase in seine Trocknungsphase kann über ein Zeitrelais eingestellt oder von einem Feuchtigkeitssensor gesteuert werden, der die Feuchte des Trocknungsmittels im Behälter des Lufttrockners sensiert.

Die WO 2017 157 503 A1 beschreibt eine Trocknungseinrichtung einer Druckluft-Versorgungsanlage eines Fahrzeugs mit einem Fördereingang, einem Förderausgang, einem Regenerationseingang und einem Entlüftungsausgang sowie zwei parallelen Trocknerleitungen mit jeweils einer Trocknereinheit und einem Umschaltventil zum Umschalten zwischen einem Förderbetrieb und Regenerationsbetrieb der beiden Trocknereinheiten, die alternierend betrieben werden. Über Feuchtigkeitssensoren in den Ausgängen der Trocknerleitungen oder in einer gemeinsamen Ausgangsleitung werden Feuchtigkeitsgrade der getrockneten Druckluft erfasst, weiterhin werden Druckdifferenzen vor und nach den Trocknereinheiten gemessen und für die Ansteuerung eines Vorsteuerventils des Umschaltventils, eines Regenerationsventils oder eines Kompressorsteuerventils verwendet. Aus dem Feuchtigkeitsgehalt der Trocknereinheiten wird ein Summenfeuchtigkeitsgehalt beider Trocknereinheiten ermittelt, wobei eine Umschaltung in Abhängigkeit einer oberen Feuchtigkeitsschwelle und unteren Feuchtigkeitsschwelle erfolgt.

Der Erfindung liegt die Aufgabe zugrunde, ein Verfahren zur Steuerung einer Druckluft-Versorgungseinrichtung sowie eine derartige Druckluft-Versorgungseinrichtung zu schaffen, die eine hohe Trocknerleistung bei geringem Energieverbrauch ermöglichen.

Diese Aufgabe wird durch ein Verfahren und eine Druckluft-Versorgungseinrichtung nach den unabhängigen Ansprüchen gelöst. Die Unteransprüche beschreiben bevorzugte Weiterbildungen. Weiterhin sind ein Druckluftsystem und Nutzfahrzeug mit der Druckluft-Versorgungseinrichtung vorgesehen.

Das erfindungsgemäße Verfahren kann insbesondere mit einer erfindungsgemäßen Druckluft-Versorgungseinrichtung und/oder einem erfindungsgemäßen Druckluftsystem durchgeführt werden; die erfindungsgemäße Druckluft- Versorgungseinrichtung ist insbesondere zur Durchführung des erfindungsgemäßen Verfahrens vorgesehen.

Somit wird ein Betriebsmodus der Druckluft-Versorgungseinrichtung in Abhängigkeit zumindest einer ermittelten aktuellen Taupunktabsenkung und einer Soll- Taupunktabsenkung eingestellt; der Betriebsmodus beeinflusst oder verändert hierbei vorzugsweise zumindest die Anzahl und/oder Länge der Regenerationsphasen.

Die Einstellung bzw. Festlegung des Betriebsmodus entspricht somit insbesondere auch einer Änderung des Betriebsmodus, wenn bei der Bewertung des Vergleichs eine Änderung gegenüber dem aktuellen Betriebsmodus ermittelt wird.

Somit wird nicht lediglich eine Feuchtigkeit gemessen und zur Steuerung und Regelung der Regenerationsphasen herangezogen, sondern ein Betriebsmodus in Abhängigkeit des Vergleichs einer aktuellen mit einer Soll-Taupunktabsenkung gewählt.

Erfindungsgemäß werden einige Vorteile erreicht. Gegenüber einer Regelung aufgrund von Feuchtigkeitsmessungen, wie sie in den eingangs genannten Verfahren vorgesehen sind, und auch gegenüber einer festen Taupunktabsenkung, die aus Sicherheitsgründen hinreichend hoch gewählt wird, um unter unterschiedlichen Umgebungsbedingungen eine Wasseransammlung in den Verbraucherkreisen zu verhindern, kann erfindungsgemäß die Taupunktabsenkung angepasst werden, so dass zum einen eine hinreichende Leistungsfähigkeit zur Trocknung der Druckluft erreicht wird, zum anderen aber auch eine hohe Energieeffizienz ermöglicht wird, da unnötig hohe Taupunktabsenkungen vermieden werden können. Insbesondere wird hierbei erkannt, dass hierzu grundsätzlich nur Daten erforderlich sind, die entweder bereits zur Verfügung stehen oder mit geringem Aufwand aufgenommen werden können.

Das erfindungsgemäße Verfahren erfordert somit gegenüber bestehenden Systemen grundsätzlich keine oder keine relevanten Eingriffe in die Hardware-Ausbildung. Es kann vorteilhafterweise eine geeignete Programmierung oder Einstellung der Steuereinheit erfolgen, die die Regenerationsphasen geeignet einstellt oder regelt.

Die aktuelle Taupunktabsenkung wird vorzugsweise durch Messung einer Feuchtigkeit in dem Druckluftsystem ermittelt, insbesondere der Druckluft-Versorgungseinrichtung und/oder einer nachfolgenden Verbraucherstufe ermittelt.

Gemäß einer bevorzugten Ausbildung beeinflusst oder verändert der Betriebsmodus die Dauer und/oder Anzahl der Regenerationsphasen, gegebenenfalls auch die Förderphasen und/oder Leerlaufphasen. Hierbei kann insbesondere der Anfangspunkt und Endpunkt der Regenerationsphasen eingestellt werden. So kann ein Betriebsmodus zwischen einem unteren Wert mit hoher Energie-Effizienz und geringer Leistungsfähigkeit, und einem hohen Wert mit hoher geringer Leistungsfähigkeit und geringerer Energie-Effizienz, d.h. höherem Energie-Verbrauch gewählt werden. Ein durch längere Regenerationsphasen stärker getrockneter Lufttrockner, d.h. insbesondere mit stärker entfeuchtetem Regenerationsmittel, ermöglicht eine bessere Trocknung der Druckluft, die sich insbesondere in einer höheren Taupunktabsenkung der geförderten Druckluft darstellt; durch längere Regenerationen steigt jedoch der Energiebedarf. Somit kann durch längere und/oder häufigere Regenerationsphasen eine stärkere Regeneration der Lufttrocknereinheit und somit eine höhere Leistungsfähigkeit erreicht werden, und entsprechend durch Verringerung der Dauer und/oder Eintritt der Regenerationsphasen eine höhere Energieeffizienz.

Die aktuelle Taupunktabsenkung kann insbesondere ermittelt werden, indem aus der ermittelten Feuchtigkeit zunächst ein aktueller Taupunkt, und aus dem aktuellen Taupunkt und der Umgebungstemperatur dann die aktuelle Taupunktabsenkung ermittelt wird.

Die Feuchtigkeit kann an verschiedenen Stellen gemessen werden, z.B. einem Ausgangsbereich der Druckluft-Versorgungseinrichtung zwischen der Lufttrocknereinheit und den Verbraucherkreisen einer nachfolgenden Verbraucherstufe, und/oder in einem Regenerationspfad. Somit wird eine direkte Messung der Feuchtigkeit nach Verlassen der Lufttrocknereinheit oder vor Rückführung der Druckluft bei der Regeneration ermöglicht.

Weiterhin können Feuchtigkeitssensoren auch in der Verbraucherstufe, z.B. in einem der Verbraucherkreise, z. B. einem der Betriebsbremskreise, vorgesehen sein, so dass hier direkt in den relevantesten Verbraucherkreisen die Feuchtigkeit der gespeicherten Druckluft ermittelt wird, z. B. auch in den Druckluftspeichern dieser Verbraucherkreise, um die Gefahr einer Kondenswasser-Abscheidung zu erkennen.

Als Feuchtigkeitswert kann eine relative Feuchtigkeit oder eine absolute Feuchte ermittelt werden. Die Messung einer relativen Feuchtigkeit ist sensortechnisch oftmals einfacher, wobei nachfolgend eine absolute Feuchte und der Taupunkt, insbesondere in Abhängigkeit der Temperatur, ermittelt werden kann.

Zur Ermittlung der Soll-Taupunktabsenkung werden insbesondere Umgebungs-Temperaturdaten aufgenommen. Hierzu werden vorteilhafterweise zunächst aktuelle Umgebungs-Temperaturdaten aufgenommen, um somit eine Taupunktabsenkung gegenüber der aktuellen Umgebungs-Temperatur auszubilden. Gemäß vorteilhafter Ausführungsformen können weiterhin oder auch alternativ hierzu projizierte bzw. zukünftige Umgebungstemperaturen, insbesondere in der jeweiligen Position bzw. am Ort des Fahrzeugs herangezogen werden. Bereits hierdurch kann eine zu hohe Taupunktabsenkung vermieden werden, da somit z. B. eine deutliche Absenkung der Umgebungstemperatur, z. B. über Nacht, berücksichtigt bzw. ausgeschlossen werden kann. So kann grundsätzlich zum Beispiel auch eine hohe zukünftige, d.h. projizierte, Umgebungs- Temperaturabsenkung über Nacht alleine für die Ermittlung der Soll-Taupunktabsenkung relevant sein, ohne dass in diesem Fall die aktuelle Umgebungs-Temperaturabsenkung relevant ist.

Zur Ermittlung der Soll-Taupunktabsenkung können insbesondere auch projizierte Fahrzeug-Betriebsdaten aufgenommen werden, die insbesondere ein oder mehrere Elemente aus der Gruppe sind, die gebildet ist aus:

einem Luftverbrauch von Fahrzeugsystemen, z.B. von Luftfedern, Bremssystemen, Getriebestellern, einer Fahrzeuggeschwindigkeit, einer Fahrtdauer, einer Routenplanung, projizierten Zeitdauern von Fahrzeugstillständen und/oder Zeitpunkten von F ahrzeugstillständen.

Dies ermöglicht insbesondere, bei einer anstehenden Fahrt die zu erwartende Erwärmung des Druckluftsystems zu berücksichtigen. So wird insbesondere bei Einsatz des Kompressors, aber auch bereits durch den Motor und andere Verbraucher, die Temperatur im Fahrzeug und Druckluftsystem erhöht, so dass die Umgebungstemperatur hier gegebenenfalls nicht oder nicht im Umfang wie bei einem Fahrzeug im Stillstand relevant ist, sondern gegebenenfalls die Betriebsdaten alleine relevant sind. Somit können insbesondere unnötige Taupunktabsenkungen vermieden werden.

Gemäß einer besonders vorteilhaften Ausführungsform werden auch projizierte, zukünftige Positionsdaten, insbesondere Kartendaten einer oder mehrerer geplanter Fahrten, d. h. auch Mapping-Daten, berücksichtigt. Somit wird eine geplante Fahrt des Nutzfahrzeugs berücksichtigt, wobei zu den Positionen der Fahrt jeweils die Umgebungstemperatur ermittelt werden kann, insbesondere auch unter Berücksichtigung der Höhe und Tageszeit. Somit kann z. B, bei einer Fahrt über einen Bergpass die entsprechende Temperaturabsenkung der Tageszeit und/oder Höhe berücksichtigt werden, weiterhin eine Temperaturabsenkung über Nacht. Hiemit kann somit die Soll-Taupunktabsenkung bereits geeignet ermittelt werden, d. h. insbesondere auch eine zu hohe Taupunktabsenkung vermieden werden.

Der Betriebsmodus kann unter Berücksichtigung einer Soll-Energieeffizienz und einer Soll-Leistungsfähigkeit ermittelt werden; somit gehen hier die relevantesten Anforderungen ein, um einen geeigneten Betriebsmodus zu bestimmen, z.B. auf einer linearen Skala zwischen einem niedrigen Wert mit geringer Leistungsfähigkeit, aber somit sparsam bzw. mit hoher Energie-Effizienz, und einem hohen Wert mit hoher Leistungsfähigkeit.

Gemäß einer bevorzugten Ausführungsform wird bei dem Vergleich eine DPD - Abweichung als Differenz der Soll-Taupunktabsenkung und der aktuellen Taupunktabsenkung (DPD) ermittelt, und der Betriebsmodus in Abhängigkeit der DPD - Abweichung eingestellt. Somit kann der Betriebsmodus direkt und eindeutig gewählt werden, z.B. durch Zuordnung der Werte der DPD -Abweichung zu jeweiligen Betriebsmodi, und somit eine schnelle Anpassung erfolgen. Hierzu kann die DPD-Abweichung in mehrere Klassen bzw. Gruppen unterteilt werden, z.B. auch durch einen unteren Grenzwert und oberen Grenzwert, zwischen denen somit ein Bereich um Null herum gebildet wird, der keine Änderung des aktuellen Betriebsmodus verlangt, und Bereiche oberhalb und unterhalb der Grenzwerte, wobei z.B. auch mehr als ein oberer Grenzwert vorgesehen sein kann, um gegebenenfalls eine schnelle Steigerung der Performance zu erreichen. Somit wird eine sichere Kategorisierung mit eindeutig vorgegebenen Ansteuerungen der Regenerationsphasen sichergestellt, und ein dynamisches Ansprechverhalten auf die ermittelte DPD-Abweichung.

Gemäß einer bevorzugten Ausführungsform wird weiterhin der Druckluftbedarf ermittelt, z.B. durch Druckmessung in den Verbraucherkreisen. Somit wird nicht lediglich auf die Taupunktabsenkung geregelt, sondern ergänzend auf den Druckluftbedarf. Hierdurch können somit insbesondere auch zusätzlich zu den Regenerationsphasen die Förderphasen eingestellt werden.

Entsprechend wird eine Druckluft-Versorgungseinrichtung geschaffen, insbesondere mit der hierfür ausgebildeten Steuereinheit, sowie ein Druckluftsystem mit der Druckluft-Versorgungseinrichtung und den Verbraucherkreisen, wobei hier insbesondere ergänzend ein oder mehrere Feuchtigkeitssensoren, vorteilhafterweise auch ein Drucksensor zur Ermittlung des Bedarfs vorgesehen ist.

Die Erfindung wird im Folgenden anhand der beiliegenden Zeichnungen an einigen Ausführungsformen näher erläutert. Es zeigen:

Fig. 1    ein Druckluftsystem eines Nutzfahrzeugs mit einer Druckluft-Versorgungseinrichtung. gemäß einer Ausführungsform der Erfindung;

Fig. 2    ein Flussdiagramm der Prozessschritte der Bestimmung einer Soll-Taupunktabsenkung, für ein Verfahren zur Steuerung einer Druckluft-Versorgungseinrichtung gemäß einer Ausführungsform der Erfindung;

Fig.3     ein weiteres Flussdiagramm der Prozessschritte zur Bestimmung einer Taupunktabsenkung gemäß einer Ausführungsform der Erfindung;

Fig. 4    ein weiteres Flussdiagramm der Prozessschritte zur Bestimmung der Taupunktabsenkung gemäß einer Ausführungsform der Erfindung;

Fig. 5    ein Flussdiagramm eines Verfahrens zur Steuerung einer Druckluft-Versorgungseinrichtung gemäß einer Ausführungsform.

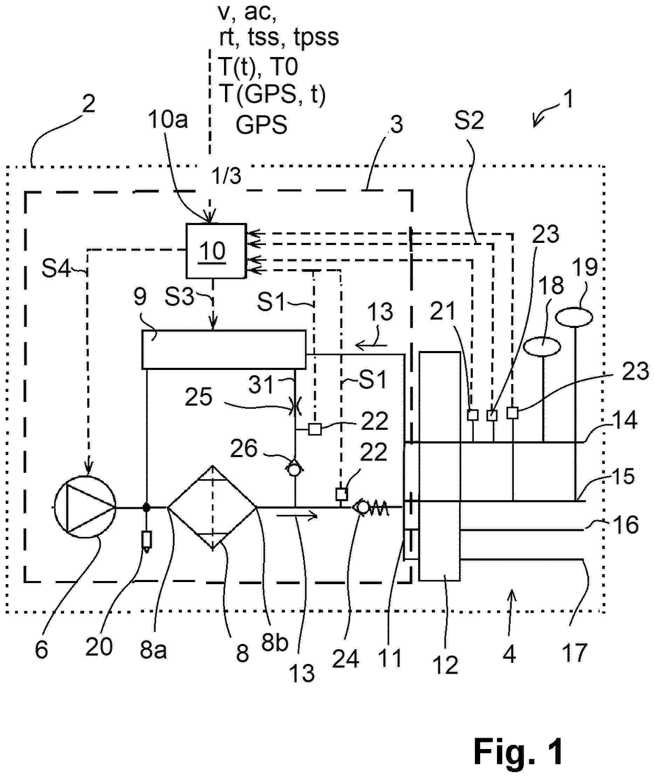

Gemäß Figur 1 ist in einem Nutzfahrzeug 1 ein Druckluftsystem 2 vorgesehen, das im Wesentlichen eine Druckluft-Versorgungseinrichtung 3 und eine Verbraucherstufe 4 mit Verbraucherkreisen 14, 15, 16, 17 aufweist. Die Druckluft- Versorgungseinrichtung 3 weist im Wesentlichen einen Kompressor 6, eine Lufttrocknereinheit 8 mit einem Trockner-Eingang 8a und einem Trockner-Ausgang 8b, eine Regenerations-Ventileinrichtung 9 und eine elektronische Steuereinheit ECU 10 auf. Der Kompressor 6 fördert in Förderphasen Druckluft 13 durch die Lufttrocknereinheit 8 über ein erstes Rückschlagventil 24 zu einem Ausgangsbereich 11 der Druckluft-Versorgungseinrichtung 3, die nachfolgend über ein Mehrkreisschutzventil 12 der Verbraucherstufe 4 zu den einzelnen Verbraucherkreisen leitet, wobei in Figur 1 beispielhaft vier Verbraucherkreise 14, 15, 16, 17 eingezeichnet sind, z.B. mit Betriebsbremskreisen 14, 15. Die so geförderte und getrocknete Druckluft 13 wird in Druckluftspeichern, z.B. den Druckluftspeichern 18, 19 der Betriebsbremskreisen 14, 15 gespeichert. In Regenerationsphasen wird durch Ansteuerung der Regenerations-Ventileinrichtung 9 zuvor geförderte und getrocknete Druckluft 13 von dem Ausgangsbereich 11 zurück über die Regenerations-Ventileinrichtung 9 und einen Regenerationspfad 31 mit einer Drossel 25 und einem zweiten Rückschlagventil 26 und über den Trockner-Ausgang 8b durch die Lufttrocknereinheit 8 geleitet und über den Trockner-Eingang 8a an einem Druckluftauslass 20 abgelassen. Zusätzlich zu den Förderphasen und Regenerationsphasen sind im Allgemeinen auch Leerlaufphasen ohne Förderung und Regeneration vorgesehen. Die Steuerung, d. h. Einleitung und Beendigung der Förderphasen, Regenerationsphasen und Leerlaufphasen erfolgt durch die elektronische Steuereinheit 10, die hierzu insbesondere die Regenerations-Ventileinheit 9 und ggf. den Kompressor 6 ansteuert. Es sind unterschiedliche Ausbildungen des Kompressors 6 möglich: in einem Nutzfahrzeug 1 mit Verbrennungsmotor ist der Kompressor 6 im Allgemeinen auf der Motorwelle angeordnet, z.B. über eine Kupplung, so dass die ECU 10 die Kupplung ansteuert, um den Kompressor 6 ein- und auszuschalten; weiterhin kann der Kompressor 6 von der ECU 10 deaktiviert werden, indem er in einen Leerlauf-Betrieb geschaltet wird. Bei Nutzfahrzeugen mit elektrischen Antrieben kann ein Kompressor 6 z. B. auch direkt ein- und ausgeschaltet werden.

In dem Druckluftsystem 2 ist mindestens ein Feuchtigkeitssensor 22, 23 vorgesehen, der einen Feuchtigkeitswert der geförderten Druckluft 13 misst und ein Feuchtigkeits-Messsignal S1 an die ECU 10 ausgibt. Hierbei kann der Feuchtigkeitssensor 22, 23 insbesondere die relative Feuchtigkeit der Druckluft 13 messen; es kann aber auch ein absoluter Feuchtewert gemessen werden. Vorzugsweise ist hierzu in der Druckluft-Versorgungseinrichtung 3 ein interner Feuchtigkeitssensor 22 vorgesehen, insbesondere in dem Ausgangsbereich 11, und/oder zwischen dem Trocknerausgang 8b und dem ersten Rückschlagventil 24, und/oder in dem Regenerationspfad 31, z.B. zwischen der Drossel 25 und dem zweiten Rückschlagventil 26. Weiterhin können auch ein oder mehrere externe Feuchtigkeitssensoren 23 in der Verbraucherstufe 4, z. B. in den Druckluftspeichern 18, 19 der beiden Betriebsbremskreisen 14, 15 vorgesehen sein. Ergänzend ist vorzugsweise ein Drucksensor 21 an mindestens einem der Verbraucherkreise, z.B. einem Betriebsbremskreis 14 oder den beiden Betriebsbremskreisen 14, 15 vorgesehen, der ein Druckmesssignal S2 ausgibt, durch das der Druckluftbedarf abgeschätzt werden kann. Der Druckluftbedarf kann weiterhin auch aus einer theoretischen Ermittlung auf Grundlage der Förderphasen, Regenerationsphasen und dem Verbrauch der Druckluftverbraucher ermittelt werden.

Die ECU 10 stellt zunächst einen Betriebsmodus BM ein, z.B. auf einer diskreten Skala zwischen einem minimalen und maximalen Wert, der z.B. die Leistungsfähigkeit bzw. Performance der Druckluft-Versorgungseinrichtung 3, d.h. das Trocknungsvermögen in der Regenerationsphase wiedergibt. Somit kann z.B. in einem höheren Betriebsmodus die Dauer und/oder Anzahl der Regenerationsphasen erhöht sein. Hierbei ermittelt die ECU 10 aus insbesondere dem Feuchtigkeitssignal S1 einen aktuellen Taupunkt DP, d.h. eine Taupunkt-Temperatur (in Grad Celsius), und eine aktuelle Taupunktabsenkung c-DPD als Temperaturdifferenz (in Kelvin), die somit die Leistungsfähigkeit beschreibt, da eine besser regenerierte Lufttrocknereinheit 8 der Druckluft 13 mehr Feuchtigkeit entziehen kann.

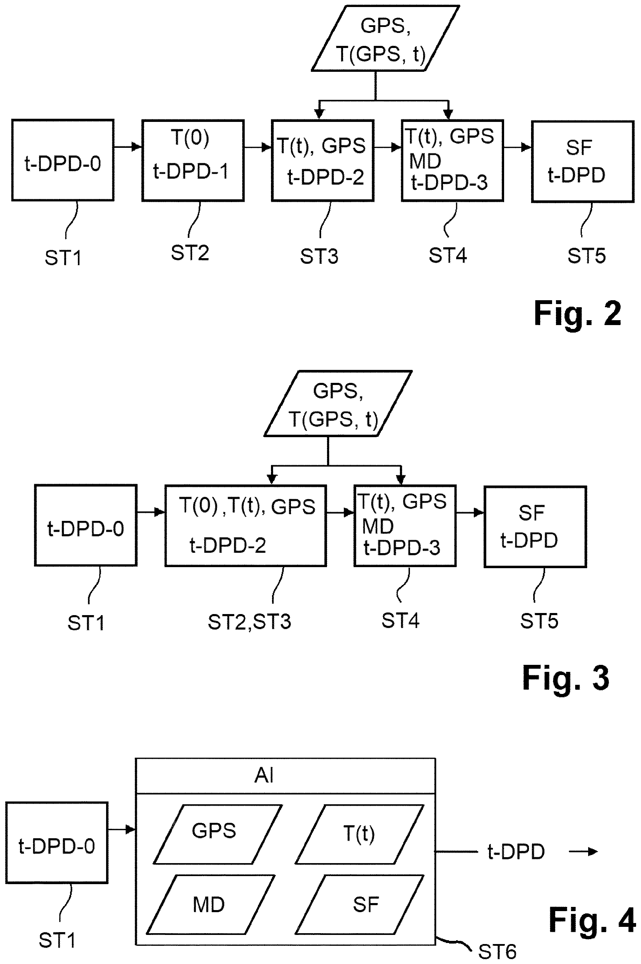

In den Flussdiagrammen der Figuren 2 bis 5 sind verschiedene Ausführungsformen mit Prozessschritten der Ermittlung der Taupunktabsenkung für das Verfahren zur Steuerung der Druckluft-Versorgungseinrichtung gezeigt.

Gemäß Figur 2 wird in einem Schritt ST1 eine anfängliche Soll-Taupunktabsenkung t-DPD-0 angesetzt; die anfängliche Soll-Taupunktabsenkung t-DPD-0 kann z.B. als fixer Wert gespeichert sein, z.B. t-DPD-0= 30K (Kelvin).

Nachfolgend wird in Schritt ST2 eine erste modifizierte Soll-Taupunktabsenkung t-DPD-1 ermittelt, indem von der ECU 10 über ihre Schnittstelle 10a insbesondere eine aktuelle Umgebungs-Temperatur T(0) herangezogen wird; somit wird insbesondere eine hohe Taupunktabsenkung vermieden, wenn bei der aktuellen Umgebungstemperatur T(0) keine Kondensatbildung in den Verbraucherkreisen 14 bis 17 zu erwarten ist.

Nachfolgend wird in Schritt ST3 die so ermittelte erste modifizierte Soll-Taupunktabsenkung t-DPD-1 unter Einbeziehung einer vorhergesagten (projizierten) Umgebungstemperatur T(t), d.h. der Umgebungstemperatur als Funktion der Zeit, erneut modifiziert, sodass eine zweite modifizierte Soll-Taupunktabsenkung t-DPD-2 ermittelt wird. Hierbei kann vorzugsweise die über einen Zeitraum von 24h vorhergesagte (projizierte) Umgebungstemperatur T(t) herangezogen werden, so dass insbesondere eine Temperaturabsenkung der Umgebungstemperatur über Nacht mit berücksichtigt wird. Weiterhin kann die aktuelle Position als Positionsdaten, z.B. GPS-Daten, berücksichtigt werden, wobei mit der geographischen Position auch die Höhe (über dem Meeresspiegel) berücksichtigt werden kann.

Ergänzend oder alternativ können In die Ermittlung der zweiten modifizierten Soll-Taupunktabsenkung t-DPD-2 auch aktuelle und/oder projizierte Fahrzeug-Betriebsdaten einbezogen werden, und/oder es kann eine dritte modifizierte Soll-Taupunktabsenkung aus den Fahrzeug-Betriebsdaten ermittelt werden. Hierbei können als relevante Fahrzeug-Betriebsdaten insbesondere ein Luftverbrauch (ac) von Fahrzeugsystemen, z.B. von Luftfedern, Bremssystemen, Getriebestellern, weiterhin eine Fahrzeuggeschwindigkeit v, Fahrtdauer rt, Routenplanung, projizierte Zeitdauern tss und/oder Zeitpunkte tpss von Fahrzeugstillständen herangezogen werden.

In Schritt ST4 wird dann die zweite (oder dritte) modifizierte Soll-Taupunktabsenkung t-DPD-2 unter Einbeziehung von Missionsdaten MD, d.h. insbesondere von geplanten Fahrten, erneut modifiziert und somit eine dritte modifizierte Soll-Taupunktabsenkung t-DPD-3 ermittelt. Hierbei werden wiederum Positionsdaten, d.h. insbesondere GPS-Daten zu der Fahrstrecke entsprechend den Missionsdaten, berücksichtigt.

So kann z.B. eine Position mit niedrigster Temperatur auf den geplanten Fahrstrecken herangezogen werden, z.B. ein Pass über Berge, da dort sehr niedrige Temperaturen auftreten können; somit kann die dritte modifizierte Soll-Taupunktabsenkung t-DPD-3 z.B. unter Berücksichtigung der projizierten minimalen Umgebungstemperatur T(t, GPS) ermittelt werden. Somit kann ein Temperaturprofil in Abhängigkeit der Umgebung, insbesondere der Höhe über dem Meeresspiegel, herangezogen werden, Weiterhin kann der projizierte Druckluftbedarf berücksichtigt werden, für den wiederum das Fahrstrecken-Profil und weiterhin Fahrzeugdaten, insbesondere eine Fahrzeuglast herangezogen wird, um hieraus den zu erwartenden Druckluftbedarf zu bestimmen.

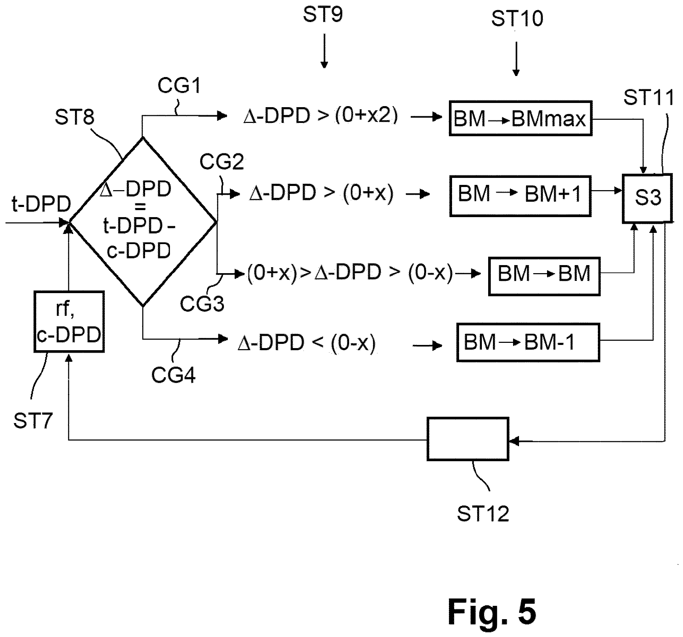

Nachfolgend wird in Schritt ST5 in der dritten modifizierten Soll-Taupunktabsenkung t-DPD-3 ein Sicherheitsfaktor SF von z.B. SF = 20% berücksichtigt, um die Sicherheit zu erhöhen, sodass nachfolgend die endgültig berechnete Soll-Taupunktabsenkung t-DPD ausgegeben wird, die dann nachfolgend in Fig. 5 bei der Bestimmung des Betriebsmodus BM herangezogen wird.

Gemäß einer bevorzugten Ausbildung erfolgt die Bestimmung der Soll- Taupunktabsenkung t-DPD nur, wenn sämtliche Schritte ST2 bis ST5 durchgeführt werden können. Aus Sicherheitsgründen wird bei Ausfall einer der Schritte keine dynamische Soll-Taupunktabsenkung durchgeführt, sondern die feste Soll-Taupunktabsenkung, d.h. die in Schritt ST1 angesetzte Anfangs-Soll-Taupunktabsenkung t-DPD-0 von z. B. 30 K, angesetzt.

Gemäß der Ausführungsform der Figur 3 sind die Schritte ST2, ST3 kombiniert, d.h. es wird eine projizierte bzw. vorhergesagte Umgebungstemperatur der Positionsdaten GPS entsprechend der geplanten Mission bzw. Missionsdaten berücksichtigt. Somit kann z.B. berücksichtigt werden, dass ein Pass über ein Gebirge mittags überquert werden wird, wenn die Umgebungstemperatur T(t, GPS) relativ hoch ist, so dass z.B. eine geringere Soll-Taupunktabsenkung t-DPD angesetzt werden kann. Hierbei ist wiederum zu berücksichtigen, dass die genaue Zuordnung von Zeitpunkten zu Kartendaten bzw. GPS-Daten unsicher ist, da Verzögerungen durch Staus usw. auftreten können, so dass hier gegebenenfalls ergänzende Bereichsangaben für die Zuordnung von Position und Zeitpunkt anzusetzen sind.

Gemäß Ausführungsform der Figur 4 erfolgt zunächst wiederum eine erste Modifikation unter Einbeziehung der aktuellen Umgebungstemperatur T(0), sodass wiederum eine erste modifizierte Soll-Taupunktabsenkung t-DPD-1 ermittelt wird. Nachfolgend erfolgt dann in Schritt ST7 eine Bestimmung der Soll-Taupunktabsenkung t-DPD durch einen AI-Algorithmus (artificial intelligence), der die in Figur 2, 3 in den Schritten ST3 bis ST5 berücksichtigten Eingangsdaten heranzieht und selbsttätig ausrechnet, insbesondere durch ein selbsttätiges Lernverfahren. Somit können in Schritt ST7 an Eingangsdaten herangezogen werden:

- Positionsdaten, insbesondere GPS-Daten GPS, einschließlich Angaben zur Höhe,
- Projizierte, vorhergesagte Umgebungdaten, d.h. insbesondere der Umgebungstemperatur T(GPS, t)
- Missionsdaten MD bzw. Kartendaten
- wiederum vorzugsweise eine Einbeziehung des Sicherheitsfaktors SF

Gemäß einer abgewandelten Ausführungsform kann weiterhin auch die erste Modifikation des Schrittes ST2 ergänzend in den AI-Algorithmus einbezogen wer-

den.

Gemäß einer weiteren abgewandelten Ausführungsform kann auch statt Schritt ST1, d.h. statt des festen Ausgangswertes der Soll-Taupunktabsenkung t-DPD-0, ein Wert der anfänglichen Soll-Taupunktabsenkung t-DPD-0 durch den Al-Algorithmus erlernt werden, d.h. Schritt ST1 wird in Schritt ST6 mit einbezogen.

Figur 5 zeigt eine Ausführungsform der nachfolgenden Regelung bzw. Einstellung des Betriebsmodus BM auf Grundlage der zuvor in den Fig. 2 bis 4 ermittelten Soll-Taupunktabsenkung t-DPD. Somit wird von links die in Schritt ST5 oder ST6 ermittelte Soll-Taupunktabsenkung t-DPD aufgenommen. Weiterhin wird in Schritt ST7 eine aktuelle Taupunktabsenkung c-DPD ermittelt auf Grundlage der gemessenen Feuchtigkeit rf, bzw. einer absoluten Feuchte, die mittels der gemessenen relativen Feuchtigkeit ermittelt wird.

Hierbei wird die Abweichung der aktuell gemessenen Taupunktabsenkung c-DPD von der noch nicht erreichten Soll-Taupunktabsenkung t-DPD ermittelt. Wenn somit derzeit die Lufttrocknereinheit 8 zu viel Feuchtigkeit enthält und somit keine hinreichende Taupunktabsenkung c-DPD erreicht, müssen die Regenerationsphasen verlängert und/oder öfter durchgeführt werden, was somit zur Einstellung einer höheren Leistung führt. Wenn hingegen die aktuelle Taupunktabsenkung c-DPD höher ist als die Soll-Taupunktabsenkung t-DPD, so werden die Regenerationsphasen verkürzt und/oder seltener durchgeführt, was zu einer Verbesserung der Energie-Effizienz führt.

Gemäß der gezeigten Ausführungsform der Fig. 5 erfolgt nicht lediglich eine direkte Ansteuerung der Regenerationsventileinrichtung 9, sondern vorteilhafterweise eine Änderung des aktuellen Betriebsmodus BM, vorzugsweise als Regelung auf einen Betriebsmodus, der zu der Soll-Taupunktabsenkung t-DPD führt. In Schritt ST8 wird eine DPD-Abweichung Delta-DPD ermittelt wird als Differenz

$$\text{Delta-DPD} = \text{t-DPD} - \text{c-DPD}.$$

Die DPD-Abweichung Delta-DPD wird dann in einem Bewertungsschritt ST9 bewertet bzw. klassifiziert, hier z.B. durch Vergleich mit einem unteren Grenzwert 0-x, einem ersten oberen Grenzwert 0+x und einem zweiten oberen Grenzwert 0+X2, mit X2 > X1, so dass dann für jede Fallgruppe CG1 bis CG4 ein Regelungsschritt ST10 erfolgt, der zu einem neuen Betriebsmodus BM führt:

Erste, obere Fallgruppe CG1: Delta-DPD >> 0+X, was als Delta-DPD > 0+X2, mit X2 > X1, ermittelt wird,
d.h. es liegt eine sehr geringe Performance bzw. Leistungsfähigkeit vor.
Hier wird gemäß Schritt ST11-1 der Betriebsmodus BM auf den maximalen Wert BMmax erhöht, um die Performance schnell zu steigern

zweite Fallgruppe CG2: Delta-DPD > 0+X,
d.h. die Leistungsfähigkeit ist etwas zu niedrig. Hier wird gemäß Schritt ST10 der Betriebsmodus BM um einen geringen Wert, z.B. um 1, in Richtung einer höheren Performance erhöht, d.h. BM → BM+1.

dritte Fallgruppe CG3: 0 + X > Delta-DPD > 0 - X,
d.h. Delta-DPD liegt in einem Bereich um Null herum bzw. die aktuelle Taupunktabsenkung c-DPD liegt im Bereich um die Soll-Taupunktabsenkung t-DPD herum; hier wird gemäß Schritt ST11-3 der derzeitige Betriebsmodus BM beibehalten,

vierte, unterste Fallgruppe CG4: Delta-DPD < 0 -X,
d.h. Delta-DPD ist negativ und klein, so dass die Soll-Taupunktabsenkung t-DPD weit übertroffen ist und eine hohe Performance vorliegt, jedoch bei geringer Energie-Effizenz.
Hier wird der Betriebsmodus BM um einen Wert 1 verringert in Richtung höherer Energie-Effizienz.

Somit erfolgt gemäß der Ausführungsform der Fig. 5 vorzugsweise eine nicht-lineare Regelung des Betriebsmodus BM. Gemäß dieser Ausführungsform wird eine Erhöhung des Betriebsmodus BM schneller vorgenommen als eine Verringerung, wodurch wiederum eine hohe Sicherheit gewährleistet ist.

Nachfolgend werden dann gemäß Schritt ST11 in dem neuen Betriebsmodus BM die Regenerationsphasen durchgeführt, d.h. es erfolgt die Ansteuerung der Regenerations-Ventileinrichtung 9 durch die Steuersignals S3, woraus sich - wie in Schritt ST12 angedeutet - ein neuer Zustand der Lufttrocknereinheit 8 ergibt. Somit wird das Verfahren zurückgeführt, indem gemäß Schritt ST7 wiederum die sich ergebende aktuelle Taupunktabsenkung c-DPD ermittelt wird, und mit der - gegebenenfalls in der Zwischenzeit neu berechneten Soll-Taupunktabsenkung t-DPD in Schritt ST8 verglichen wird.

Bezugszeichen (Teil der Beschreibung)

| | |
|---|---|
| 1 | Nutzfahrzeug |
| 2 | Druckluftsystem |
| 3 | Druckluft-Versorgungseinrichtung |
| 4 | Verbraucherstufe |
| 6 | Kompressor |
| 8 | Lufttrocknereinheit |
| 8a | Trocknereingang |
| 8b | Trocknerausgang |
| 9 | Regenerations-Ventileinrichtung |
| 10 | elektronische Steuereinheit ECU |
| 10a | Schnittstelle |
| 11 | Ausgangsbereich der Druckluft-Versorgungseinrichtung 3 |
| 12 | Mehrkreisschutzventil |
| 13 | Druckluft |

| 14, 15, 16, 17 | Verbraucherkreise. |
| 14, 15 | Betriebsbremskreise |
| 18, 19 | Druckluftspeicher |
| 20 | Druckluftauslass |
| 21 | Drucksensor |
| 22 | interner Feuchtigkeitssensor in der Druckluft-Versorgungseinrichtung 3 |
| 23 | externer Feuchtigkeitssensor in der Verbraucherstufe 4 |
| 24 | erstes Rückschlagventil zwischen Trocknerausgang 8b und Ausgangsbereich 11 |
| 25 | Drossel |
| 26 | zweites Rückschlagventil im Regenerationspfad 31 |
| 31 | Regenerationspfad |
| | |
| S1 | Feuchtigkeits-Messsignal |
| S2 | Druck-Messsignal |
| S3 | Steuersignale |
| S4 | Kompressor-Steuersignale |
| DP | Taupunkt |
| rf | Feuchtigkeit, insbesondere relative Feuchtigkeit |
| DPD | Taupunktabsenkung |
| t-DPD | Soll-Taupunktabsenkung |
| c-DPD | aktuelle Taupunktabsenkung |
| Delta-DPD | DPD-Abweichung |
| GPS | Positionssignale |
| MD | Missionsdaten, Kartendaten |
| T(t) | Umgebungstemperatur zum Zeitpunkt t |
| T(0) | aktuelle Umgebungstemperatur |
| T(t, GPS) | Umgebungstemperatur zum Zeitpunkt an der Position GPS oder an der Position des GPS-Signals |
| ac | Luftverbrauch von Fahrzeugsystemen, z.B. von Luftfedern, Bremssystemen, Getriebestellern, |
| v | Fahrzeuggeschwindigkeit |
| rt | Fahrtdauer |
| tss | projizierte Zeitdauer |
| tpss | projizierte Zeitpunkte |

**Patentansprüche**

1. Verfahren zur Steuerung einer Druckluft-Versorgungseinrichtung (3) eines Druckluftsystems (2) eines Nutzfahrzeugs (1), wobei die Druckluft- Versorgungseinrichtung (3) aufweist:

    einen Kompressor (6), eine Lufttrocknereinheit (8) und eine Regenerations-Ventileinrichtung (9),
    wobei die Druckluft-Versorgungseinrichtung (3) in einem Betriebsmodus (BM) mit Förderphasen und Regenerationsphasen betrieben wird, wobei in den Förderphasen von dem Kompressor (6) Druckluft (13) gefördert, durch die Lufttrocknereinheit (8) geführt und hierdurch getrocknet wird, und in den Regenerationsphasen geförderte, getrocknete Druckluft (13) durch die Regenerations-Ventileinrichtung (9) und die Lufttrocknereinheit (8) geleitet wird,

**dadurch gekennzeichnet, dass**
in dem Druckluftsystem (2) eine aktuelle Feuchtigkeit (rf) ermittelt wird,
aus der ermittelten Feuchtigkeit (rf) eine aktuelle Taupunktabsenkung (c-DPD) ermittelt wird,

    - eine Soll-Taupunktabsenkung (t-DPD) ermittelt wird
    - aus aktuellen und/oder projizierten Umgebungs-Temperaturdaten (T0, T(t), T(t, GPS)), und/oder
    - aus aktuellen und/oder projizierten Fahrzeug-Betriebsdaten (ac, v, rt, tss, tpss), nachfolgend die Soll-Taupunktabsenkung (t-DPD) mit der aktuellen Taupunktabsenkung (c-DPD) verglichen wird, und

der Betriebsmodus (BM) in Abhängigkeit des Vergleichs eingestellt und/oder geändert wird.

2. Verfahren nach Anspruch 1, **dadurch gekennzeichnet, dass** in Abhängigkeit des Vergleichs in dem Betriebsmodus (BM) die Dauer und/oder Anzahl der Regenerationsphasen verändert oder eingestellt wird.

3. Verfahren nach Anspruch 1 oder 2, **dadurch gekennzeichnet, dass** aus der ermittelten Feuchtigkeit (rf) ein aktueller Taupunkt (DP) und aus dem aktuellen Taupunkt (DP) die aktuelle Taupunktabsenkung (c-DPD) ermittelt wird.

4. Verfahren nach einem der vorherigen Ansprüche, **dadurch gekennzeichnet, dass** die Feuchtigkeit (rf) gemessen wird an einer oder mehreren der folgenden Stellen:

    - in einem Ausgangsbereich (11) der Druckluft-Versorgungseinrichtung (3) zwischen der Lufttrocknereinheit (8) und Verbraucherkreisen (14, 15, 16, 17) einer nachfolgenden Verbraucherstufe (4),
    - in einem Regenerationspfad (31) zwischen der Regenerations-Ventileinheit (9) und einem Trockner-Ausgang (8b) der Lufttrocknereinheit (8);
    - in einem der Verbraucherkreise (14, 15, 16, 17), z. B. einem Druckluftspeicher (18, 19) der Verbraucherkreise, insbesondere von Betriebsbremskreisen (14, 15).

5. Verfahren nach einem der vorherigen Ansprüche, **dadurch gekennzeichnet, dass** als Feuchtigkeitswert in der Druckluft (13) gemessen wird:

eine relative Feuchtigkeit (rf), oder
eine absolute Feuchte.

6. Verfahren nach einem der vorherigen Ansprüche, **dadurch gekennzeichnet, dass** zur Ermittlung der Soll-Taupunktabsenkung (t-DPD) weiterhin aufgenommen werden ein oder mehrere Elemente der Gruppe, die enthält:

- aktuelle Umgebungstemperaturdaten (T0),
- projizierte, zukünftige Umgebungstemperaturdaten (T0, GPS),
- aktuelle Positionsdaten (GPS), insbesondere Positionsdaten (GPS) in einem globalen Positionssystem,
- projizierte, zukünftige Positionsdaten (GPS),
- Kartendaten einer oder mehrerer geplanter Fahrten.

7. Verfahren nach Anspruch 6, **dadurch gekennzeichnet, dass** ein zukünftiger Taupunkt (DP (t)) ermittelt wird aus

- den Positionsdaten, und
- den Kartendaten für eine geplante Fahrt, insbesondere unter Berücksichtigung der Umgebungstemperatur (T, T(t), T(GPS,t) auf der Wegstrecke.

8. Verfahren nach einem der vorherigen Ansprüche, **dadurch gekennzeichnet, dass** die aktuellen und/oder projizierten Fahrzeug-Betriebsdaten einige oder mehrere Elemente umfassen aus der Gruppe, die gebildet ist aus:

- Luftverbrauch (ac) von Fahrzeugsystemen, z.B. von Luftfedern, Bremssystemen, Getriebestellern,
- Fahrzeuggeschwindigkeit (v), Fahrtdauer (rt), Routenplanung, projizierte Zeitdauern (tss) und/oder Zeitpunkte (tpss) von Fahrzeugstillständen.

9. Verfahren nach einem der vorherigen Ansprüche, **dadurch gekennzeichnet, dass** der Betriebsmodus (BM) und/oder die Soll-Taupunktabsenkung (t-DPD) ermittelt wird unter Heranziehung einer Soll-Energieeffizienz und einer Soll-Leistungsfähigkeit.

10. Verfahren nach einem der vorherigen Ansprüche, **dadurch gekennzeichnet, dass** die ermittelte Soll-Taupunktabsenkung (T-DPD) nachfolgend eingeregelt wird durch Berechnung einer Taupunkt-Abweichung (Delta-DPD), die als Differenz der Soll-Taupunktabsenkung (T-DPD) und der aktuellen Taupunktabsenkung (DPD) ermittelt wird,

wobei die Steuerung der Regenerationsphasen in Abhängigkeit der DPD-Abweichung (Delta-DPD) erfolgt, wobei

- in dem Fall, dass die DPD-Abweichung (Delta-DPD) innerhalb eines Grenzwert-Bereichs (0-x, 0+x) um Null liegt, der aktuelle Betriebsmodus (BM) beibehalten wird, und
- in dem Fall, dass die DPD-Abweichung (Delta-DPD) oberhalb des Grenzwert-Bereichs (0-x, 0+x) liegt, der Betriebsmodus (BM) geändert wird in Richtung zu längeren Regenerationsphasen und/oder einer höheren Anzahl von Regenerationsphasen, und
- in dem Fall, dass die DPD-Abweichung (Delta-DPD) unterhalb des Grenzwert-Bereiches (0-x, 0+x) liegt, der Betriebsmodus (BM) in Richtung zu höherer Energieeffizienz geändert wird, insbesondere durch Verkürzung oder Verringerung der Regenerationsphasen.

11. Verfahren nach Anspruch 10, **dadurch gekennzeichnet, dass** oberhalb des Grenzwert-Bereichs (0-x, 0+x) ein zweiter oberer Grenzwert (x2) angesetzt ist, und

- in dem Fall, dass die DPD-Abweichung (Delta-DPD) oberhalb zweiten oberen Grenzwertes (x2) liegt, der Betriebsmodus (BM) auf eine maximale Regenerationsfähigkeit eingestellt wird.

12. Verfahren nach Anspruch 10 oder 11, **dadurch gekennzeichnet, dass** nach der Einstellung des Betriebsmodus (BM) eine Messung der aktuellen Taupunktabsenkung (c-DPD) erfolgt, und nachfolgend das Verfahren zurückgesetzt wird zur Ermittlung der DPD-Abweichung (Delta-DPD).

13. Verfahren nach einem der vorherigen Ansprüche, **dadurch gekennzeichnet, dass** der Betriebsmodus (BM) weiterhin eingestellt wird in Abhängigkeit eines Druckluftbedarfs, der ermittelt wird aus

- Drucksignalen einer Verbraucherstufe (4), insbesondere von mindestens einem Drucksensor (21) in einem Druckluftspeicher (18, 19) eines Verbraucherkreises (14, 15), und/oder
- einer theoretischen Ermittlung aufgrund der Förderphasen, Regenerationsphasen und Betätigungen von Verbrauchern der Verbraucherstufe (4).

14. Druckluft-Versorgungseinrichtung (3) für ein Druckluftsystem (2) eines Nutzfahrzeugs (1), wobei die Druckluft-Versorgungseinrichtung (3) aufweist:

- einen Kompressor (6) zum Fördern von Druckluft (13),

- einen Ausgangsbereich (11) zum Anschluss einer Verbraucherstufe (4) mit Verbraucherkreisen (14, 15, 16, 17),
- eine Lufttrocknereinheit (8), die zwischen dem Kompressor (6) und dem Ausgangsbereich (11) vorgesehen ist,
- eine elektronischen Steuereinheit (10), die eingerichtet ist, einen Betriebsmodus (BM) mit zumindest Förderphasen und Regenerationsphasen einzustellen, und
- eine Regenerations-Ventileinrichtung (9), die an den Ausgangsbereich (11) angeschlossen und durch die elektronische Steuereinheit (10) ansteuerbar ist zur Ausbildung der Förderphasen zum Fördern von Druckluft (13) durch die Lufttrocknereinheit (8) zu dem Ausgangsbereich (11) und der Regenerationsphasen, in denen die geförderte, getrocknete Druckluft (13) aus dem Ausgangsbereich (11) zurück durch die Lufttrocknereinheit (8) geführt wird,

**dadurch gekennzeichnet, dass**

die elektronische Steuereinheit (10) ausgebildet ist,
ein eine aktuelle Feuchtigkeit (rf) anzeigendes Feuchtigkeits-Messsignal (S1) einzulesen und aus dem Feuchtigkeits-Messsignal S1) eine aktuelle Taupunktabsenkung (c-DPD) zu ermitteln,
aus aktuellen und/oder projizierten Umgebungs-Temperaturdaten (T0, T(t)) eine Soll-Taupunktabsenkung (t-DPD) zu ermitteln,
die Soll-Taupunktabsenkung (t-DPD) mit der aktuellen Taupunktabsenkung (c-DPD) zu vergleichen und den Betriebsmodus (BM) und/oder die Regerationsphasen in Abhängigkeit des Vergleichs einzustellen und/oder zu ändern.

15. Druckluft-Versorgungseinrichtung (3) nach Anspruch 14, **dadurch gekennzeichnet, dass** die elektronische Steuereinheit (10) ausgebildet ist, das Feuchtigkeits-Messsignal (S1) einzulesen von einem internen Feuchtigkeitssensor (22) der Druckluft-Versorgungseinrichtung, der vorgesehen ist an einer oder mehreren der folgenden Stellen:

- in dem Ausgangsbereich (11),
- zwischen einem Lufttrockner-Ausgang (8b) der Lufttrocknereinheit (8) und dem Ausgangsbereich (11), insbesondere zwischen dem Lufttrockner-Ausgang (8b) und einem nachfolgenden Rückschlagventil (24), das in Förderrichtung vor dem Ausgangsbereich (11) vorgesehen ist,
- in einem Regenerationspfad (31) zwischen der Regenerations-Ventileinrichtung (9) und dem Ausgangsbereich (11), insbesondere in Strömungsrichtung hinter einer Drossel (25) des Regenerationspfades (31).

16. Druckluft-Versorgungseinrichtung (3) nach Anspruch 14 oder 15, **dadurch gekennzeichnet, dass** die elektronische Steuereinheit (10) ausgebildet ist, das Feuchtigkeits-Messsignal (S1) einzulesen von einem in dem Druckluftsystem (2), insbesondere in einem Verbraucherkreis (14, 15, 16, 17), z.B. in einem Druckluftspeicher (18, 19) eines Betriebsbremskreises (14, 15) vorgesehenen externen Feuchtigkeitssensor (23).

17. Druckluftsystem (2), das aufweist:

- eine Druckluft-Versorgungseinrichtung (3) nach einem der Ansprüche 13 bis 15,
- einer Verbraucherstufe (4) mit einem Mehrkreisschutzventil (12) und mehreren Verbraucherkreisen (14, 15, 16, 17).

18. Druckluftsystem (2) nach Anspruch 17, **dadurch gekennzeichnet, dass** in der Verbraucherstufe (4), insbesondere in oder an einem Druckluftspeicher (18, 19) eines Verbraucherkreises (14, 15), ein Drucksensor (21) und/oder ein externer Feuchtigkeitssensor (23) vorgesehen ist.

19. Nutzfahrzeug (1) mit einem Druckluftsystem (2) nach Anspruch 18.

v, ac,
rt, tss, tpss
T(t), T0
T(GPS, t)
GPS

**Fig. 1**

GPS,
T(GPS, t)

| t-DPD-0 | T(0)<br>t-DPD-1 | T(t), GPS<br>t-DPD-2 | T(t), GPS<br>MD<br>t-DPD-3 | SF<br>t-DPD |
|---------|-----------------|---------------------|---------------------------|-------------|

ST1        ST2        ST3        ST4        ST5

# Fig. 2

GPS,
T(GPS, t)

| t-DPD-0 | T(0),T(t), GPS<br>t-DPD-2 | T(t), GPS<br>MD<br>t-DPD-3 | SF<br>t-DPD |
|---------|---------------------------|---------------------------|-------------|

ST1        ST2,ST3        ST4        ST5

# Fig. 3

| t-DPD-0 | AI |
|---------|-----|

AI

| GPS | T(t) |
|-----|------|
| MD  | SF   |

t-DPD →

ST1                                    ST6

# Fig. 4

**Fig. 5**

Europäisches Patentamt

European Patent Office

Office européen des brevets

# EUROPÄISCHER RECHERCHENBERICHT

**Nummer der Anmeldung**

EP 23 20 8391

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 399 794 A1 (WABCO GMBH [DE]) 28. Dezember 2011 (2011-12-28) * Ansprüche 1-5 * * Absätze [0009], [0027] * * Abbildung 1 * ----- | 1-19 | INV. B60T17/00 F15B21/048 |
| A,D | DE 10 2010 025890 A1 (WABCO GMBH [DE]) 5. Januar 2012 (2012-01-05) * Ansprüche 1-5 * * Absätze [0022] - [0032] * * Abbildung 2 * ----- | 1-19 | |
| A,D | WO 2017/157503 A1 (WABCO GMBH [DE]) 21. September 2017 (2017-09-21) * Anspruch 1 * * Abbildungen 9-16 * * Abbildung 1 * ----- | 1-19 | |

RECHERCHIERTE SACHGEBIETE (IPC)

B60T
F15D
F15B

Der vorliegende Recherchenbericht wurde für alle Patentansprüche erstellt

| Recherchenort | Abschlußdatum der Recherche | Prüfer |
|---|---|---|
| München | 24. April 2024 | Christensen, Juan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**EP 4 552 936 A1**

## ANHANG ZUM EUROPÄISCHEN RECHERCHENBERICHT
## ÜBER DIE EUROPÄISCHE PATENTANMELDUNG NR.

EP 23 20 8391

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2024

| Im Recherchenbericht angeführtes Patentdokument | Datum der Veröffentlichung | Mitglied(er) der Patentfamilie | Datum der Veröffentlichung |
|---|---|---|---|
| EP 2399794 A1 | 28-12-2011 | DE 102010024893 A1<br>EP 2399794 A1 | 29-12-2011<br>28-12-2011 |
| DE 102010025890 A1 | 05-01-2012 | KEINE | |
| WO 2017157503 A1 | 21-09-2017 | DE 102016003311 A1<br>WO 2017157503 A1 | 21-09-2017<br>21-09-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010018949 A1
- CA 2073439 C
- DE 102010025890 A1
- DE 3727603 A1
- WO 2017157503 A1